# EUROPÄISCHE PATENTANMELDUNG

(11) **EP 2 248 687 A1**
(43) Veröffentlichungstag der Anmeldung: **10.11.2010**
(21) Anmeldenummer: 10161763.7
(22) Anmeldetag: 03.05.2010
(51) Int. Cl.: B60D 1/14, B60D 1/54, B60R 19/18

(54) **Trägeranordnung**

(30) Priorität: 04.05.2009 DE 202009006345 U
(71) Anmelder: AL-KO Kober AG, 89359 Kötz (DE)
(72) Erfinder: Rampp, Armin, 86513 Ursberg/Bayersried (DE)
(74) Vertreter: Ernicke, Hans-Dieter

(57) **Zusammenfassung**

Die Erfindung betrifft eine Trägeranordnung (6) für eine Anhängerkupplung (7) zur Verbindung mit einem Zugfahrzeug (1), wobei die Trägeranordnung (6) als Leichtbaukonstruktion ausgebildet ist. Sie weist einen Querträger (13) sowie einen Halter (8) zur Montage am Fahrzeug (1) auf. Der Querträger (13) besitzt mehrere im wesentlichen gleichgerichtete, bevorzugt aufrechte und zumindest bereichsweise seitlich distanzierte Tragplatten (14,15). Die Anhängerkupplung (7) ist im Freiraum (18) zwischen den Tragplatten (14,15) angeordnet und mit diesen verbunden. Über den Halter (8) werden die Tragplatten (14,15) untereinander und mit dem Zugfahrzeug (1) verbunden.

## Beschreibung

Die Erfindung betrifft eine Trägeranordnung für Anhängerkupplungen an Fahrzeugen, insbesondere Kraftfahrzeugen, mit den Merkmalen im Oberbegriff des Hauptanspruchs.

Eine solche Trägeranordnung ist aus der Praxis bekannt. Sie besteht aus einem stählernen Querträger in Rohrform, an dem die Anhängerkupplung mittig mit ihrem Gestell angeschraubt ist. Für derartige Trägeranordnungen sind die Einbaumöglichkeiten begrenzt. Außerdem belasten sie das Fahrzeug.

Es ist Aufgabe der vorliegenden Erfindung, eine bessere Trägeranordnung aufzuzeigen.

Die Erfindung löst diese Aufgabe mit den Merkmalen im Hauptanspruch.

Die Leichtbauausführung der Trägeranordnung hat den Vorteil, dass das Fahrzeuggesamtgewicht nicht unnötig belastet wird. Dies ist vor allem günstig für Verbrauchsmessungen am Zugfahrzeug, die in dessen maximaler Ausrüstung und Anbausituation durchgeführt werden. Gewichtseinsparungen am Zubehör helfen das Gesamtgewicht und damit den Kraftstoffverbrauch des Fahrzeugs zu minimieren.

Die beanspruchte Trägeranordnung lässt sich in vielfältiger Weise an einem Zugfahrzeug anbauen. Sie ist für unterschiedlichste Fahrzeugtypen geeignet. Sie kann insbesondere die bei manchen Fahrzeugen im Heck angeordnete Crashträgeranordnung ersetzen. Sie kann zumindest teilweise auch deren Funktion übernehmen. Die beanspruchte Trägeranordnung lässt sich an die Einbausituation am Fahrzeug anpassen und kann verborgen hinter dem Stoßfänger am Fahrzeugheck verbaut werden. Eine Montage ist dabei aufwandsarm z.B. an Längsholmen oder an einer Heckwand der Fahrzeugkarosserie möglich.

Für den angestrebten Leichtbau ist es günstig, die Trägeranordnung als Querträger auszubilden, der außerdem aus ein oder mehreren, bevorzugt zwei Tragplatten, mit einem Freiraum dazwischen besteht. Diese Anordnung ist leichter als ein massives Rohr und kann auch in besserer Weise belastungsgünstig konstruktiv ausgestaltet werden. Durch die im Zwischenraum zwischen den bevorzugt aufrechten Tragplatten eingebaute Anhängerkupplung kann eine ausreichende Verbindungsfestigkeit und Versteifung der Trägeranordnung erfolgen. Die Tragplatten können für Leichtbau in ihrer Formgebung und Materialwahl optimiert sein.

Die Trägeranordnung bzw. der Querträger kann mittels eines Halters am Fahrzeug montiert werden. Der Halter verbindet die Tragplatten, die zusätzlich durch die eingebaute Anhängerkupplung stabilisiert werden können. Der Halter kann ebenfalls für Leichtbauzwecke optimiert werden und kann z.B. als Profilteil, insbesondere als Strangpressprofilteil aus Leichtmetall ausgeführt sein, welches Gewicht spart und für die Belastungserfordernisse optimiert werden kann. Der Halter kann biegesteif sein, wobei die Profilstege stehend und bei Horizontallage des Fahrzeugs im wesentlichen vertikal ausgerichtet sind. Die Profilstege können ein versteifendes Fachwerk mit innenliegenden Hohlkammern bilden.

Je nach Fahrzeug und Anbausituation können unterschiedliche Halter eingesetzt werden, wobei die Ausgestaltung der Trägeranordnung bzw. des Querträgers und seiner Tragplatten gleich bleiben kann. Die gesamte Trägeranordnung kann als Baukastensystem gestaltet sein, welches vielfältige Anpassungsmöglichkeiten bietet. Der Halter kann ein Verbindungsteil zum Anschluss an die Tragplatten und ein Anbauteil zur Montage am Fahrzeug aufweisen, wobei diese Teile ebenfalls unterschiedlich gestaltet und an die jeweiligen Erfordernisse angepasst werden können. Insbesondere können das Verbindungs- und Anbauteil miteinander zu einem Einzelteil in Form eines Distanzelementes oder Distanzklotzes kombiniert werden, wobei hier auch die Verbindung, vorzugsweise eine Schraubverbindung, aufgenommen ist. In anderen Varianten kann der Halter als Geradverbinder oder als Eckverbinder ausgeführt sein, wobei ggf. auch eine Längenverstellbarkeit zur Anpassung an die Einbausituation oder ggf. zur Aufnahme von Dämpfungselementen vorhanden ist.

Für die Trägeranordnung ist vorzugsweise eine nachrüstbare Verbindungstechnik vorgesehen. Diese beinhaltet z.B. eine verzugfreie Verbindung, die ohne Schweißen oder andere Fügetechnik mit hohem Wärmeeintrag und Verzug der beaufschlagten Bauteile auskommt. Bevorzugt sind lösbare Verbindungen oder Bolzenverbindungen, die z.B. als Schraubverbindung, Nietverbindung oder dgl. ausführbar sind. Auch Klebeverbindungen oder kombinierte Verbindungstechniken sind möglich. Der Halter kann hierfür optimiert sein, um in die vorhandene Karosseriesituation mit möglichst wenig Aufwand eingebaut werden zu können. Hierbei kann insbesondere zur Gewichts- und Aufwandsoptimierung auf besondere Anbauteile, Versteifungen oder dgl. an der Karosserie verzichtet werden.

In den Unteransprüchen sind weitere vorteilhafte Ausgestaltungen der Erfindung angegeben.

Die Erfindung ist in den Zeichnungen beispielhaft und schematisch dargestellt. Im einzelnen zeigen:
- Figur 1:: eine abgebrochene perspektivische Ansicht vom Heck eines Fahrzeugs mit einer ersten Variante einer Trägeranordnung mit einer Anhängerkupplung,
- Figur 2:: eine perspektivische Ansicht zur Anordnung von Figur 1 aus anderem Blickwinkel,
- Figur 3:: eine Unteransicht der Trägeranordnung von Figur 1 und 2,
- Figur 4:: eine Seitenansicht der Trägeranordnung von Figur 3 mit einer schwenkbaren Anhängerkupplung in verschiedenen Stellungen,
- Figur 5:: eine perspektivische, abgebrochene und vergrößerte Ansicht der Trägeranordnung von Figur 1 bis 4 mit der Montagestelle am Fahrzeug,
- Figur 6:: eine perspektivische Draufsicht der Trägeranordnung von Figur 1 bis 5,
- Figur 7:: eine Draufsicht der Trägeranordnung von Figur 6,
- Figur 8:: eine perspektivische Ansicht einer Variante der Trägeranordnung von Figur 6,
- Figur 9:: eine perspektivische Ansicht einer weiteren Trägervariante mit einem anderen Halter,
- Figur 10 und 11:: eine Draufsicht und Seitenansicht der Trägeranordnung von Figur 9,
- Figur 12:: eine perspektivische Ansicht einer weiteren Trägervariante,
- Figur 13:: eine perspektivische Ansicht eines Fahrzeughecks mit einer anderen Trägeranordnung,
- Figur 14 und 15:: eine Draufsicht und eine Seitenansicht der Trägeranordnung von Figur 13 am Fahrzeugheck,
- Figur 16:: eine perspektivische Ansicht der Trägeranordnung von Figur 13 bis 15 und
- Figur 17 und 18:: eine Draufsicht und eine geklappte Stirnansicht der Trägeranordnung von Figur 16.

Die Erfindung betrifft eine Trägeranordnung (6) für eine Anhängerkupplung (7) an einem Fahrzeug (1). Die Erfindung betrifft ferner die einzelnen Komponenten der Trägeranordnung (6).

Das Fahrzeug (1) kann von beliebiger Art sein. Vorzugsweise handelt es sich um ein Kraftfahrzeug, insbesondere um einen PKW. Die Trägeranordnung (6) dient zur Verbindung der Anhängerkupplung (7) mit dem Zugfahrzeug (1) an dessen Heck (2). Die Befestigung erfolgt an der Karosserie (3) des Fahrzeugs (1), z.B. an einem Längsholm (4) oder einer Heckwand (5) in der nachfolgend näher beschriebenen Weise. An der Anhängerkupplung (7) oder Zugkupplung kann ein Anhänger (nicht dargestellt) angekuppelt werden.

Die Anhängerkupplung (7) kann von beliebiger Bauart sein. Sie kann z.B. als Kugelkopfkupplung gestaltet sein, die einen geraden oder abgewinkelten Kupplungshals (11) mit einem endseitigen Kupplungskopf (10), insbesondere einer Kupplungskugel, aufweist.

Die Anhängerkupplung (7) kann starr oder beweglich sein. Eine bewegliche Anhängerkupplung (7) kann lösbar sein, wobei der Kupplungshals (11) mit dem Kupplungskopf (10), in eine Halterung oder ein Kupplungsgestell (12) eingesteckt und bei Nichtgebrauch entfernt werden kann. Die Anhängerkupplung (7) kann in einer anderen Variante am Fahrzeug (1) befestigt und dabei mit einer oder mehreren rotatorischen und/oder translatorischen Achsen zwischen einer zurückgezogenen Ruhestellung und einer ausgefahrenen Betriebsstellung beweglich sein. Die Kupplungsbewegung kann von Hand oder mittels eines motorischen Antriebs mit einem oder mehreren Motoren, z.B. steuerbaren Elektromotoren, bewirkt werden. In den gezeigten Ausführungsformen kommt eine schwenkbare Anhängerkupplung (7) zum Einsatz. Sie kann z.B. um zwei sich kreuzende rotatorische Achsen verschwenkbar sein.

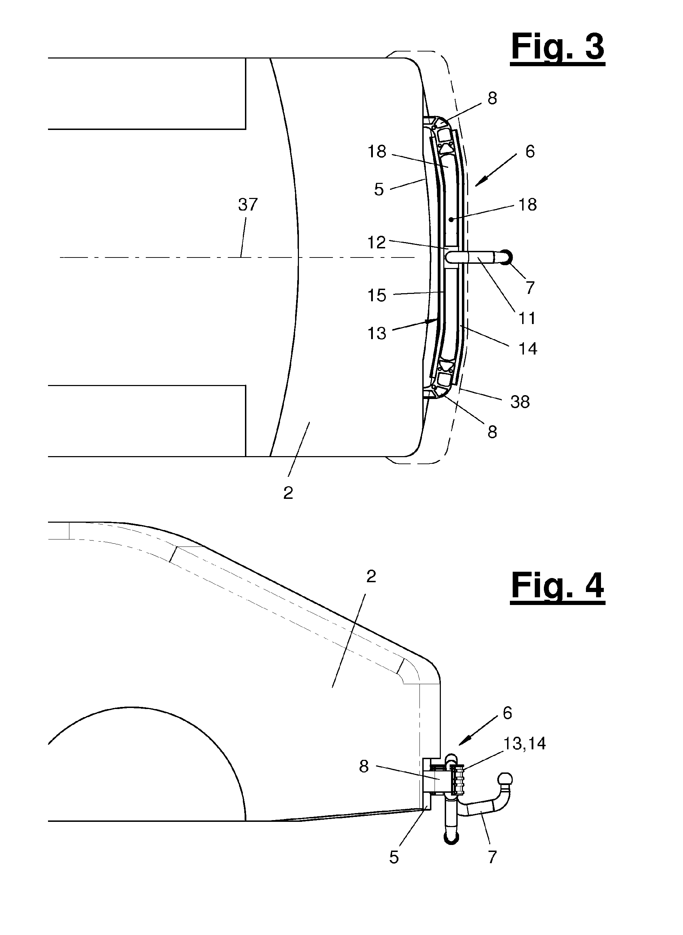

Die Trägeranordnung (6) wird am Fahrzeugheck angebaut und kann sich dort an verborgener Stelle im Bereich des Stoßfängers (38) befinden, wie dies Figur 3 schematisch zeigt. Die Trägeranordnung (6) ist als Leichtbaukonstruktion ausgebildet. Für die Ausgestaltung gibt es verschiedene Möglichkeiten. Die Anordnung der Träger kann unterschiedlich sein.

In den gezeigten Ausführungsbeispielen weist die Trägeranordnung (6) einen Querträger (13) und einen Halter (8) zur Montage am Fahrzeug (1) auf. Der Halter (8) kann mehrfach und insbesondere zweifach vorhanden sein. Er befindet sich vorzugsweise an den Enden des Querträgers (13). Die Montage des Halters (8) am Fahrzeug (1) erfolgt mittels einer geeigneten Verbindung (9).

Die Verbindung (9) kann von beliebiger Art sein. Sie kann als Schweiß- oder Lötverbindung ausgeführt sein. Im Interesse einer besseren Nachrüstbarkeit oder Austauschbarkeit kann eine verzugfreie Verbindung (9) gewählt werden, bei der eine starke Wärmeeinbringung und ein daraus evtl. resultierender Bauteilverzug entbehrlich ist. Eine solche Verbindung (9) kann z.B. eine Klebeverbindung sein. Ferner ist es möglich, eine lösbare Verbindung (9) vorzusehen. Dies kann eine Schraubverbindung, Bolzenverbindung, Nietverbindung oder dgl. sein. In den gezeigten und bevorzugten Ausführungsbeispielen wird eine Schraubverbindung verwendet.

Der Querträger (13) kann unterschiedlich ausgebildet sein. Im gezeigten Ausführungsbeispiel weist er mehrere im wesentlichen gleichgerichtete und zumindest bereichsweise unter Bildung eines Freiraums (18) seitlich distanzierte Tragplatten (14,15) auf. Die Tragplatten (14,15) haben bevorzugt eine stehende oder aufrechte Lage. In den gezeigten Ausführungsbeispielen sind jeweils zwei Tragplatten (14,15) vorhanden, die mit ihrer Hauptebene im wesentlichen vertikal ausgerichtet sein können. Hierdurch entsteht ein von oben und unten zugänglicher Freiraum (18), in dem die Anhängerkupplung (7) untergebracht sein kann. Sie kann mit ihrem Kupplungsgestell (12) mit beiden Tragplatten (14,15) fest oder lösbar verbunden sein.

Der Halter (8) verbindet die Tragplatten (14,15) untereinander und mit dem Fahrzeug (1). Die vorgenannten Verbindungen (9) bestehen dabei zum einen zwischen dem Halter (8) und dem Fahrzeug (1) und zum anderen zwischen dem Querträger (13) bzw. seinen Tragplatten (14,15) und dem Halter (8) sowie der Anhängerkupplung (7).

Die Tragplatten (14,15) können aus einem Leichtbaumaterial bestehen. Hierfür gibt es verschiedene Möglichkeiten. Einerseits können eine oder beide Tragplatten (14,15) als Profilkörper (16) ausgebildet sein. Hierbei kann es sich insbesondere um ein Strangpressprofil aus Leichtmetall oder einem anderen geeigneten Werkstoff handeln. Als Leichtbaumaterialien sind außer Leichtmetall auch Kunststoffe, Verbundwerkstoffe oder dgl. einsetzbar.

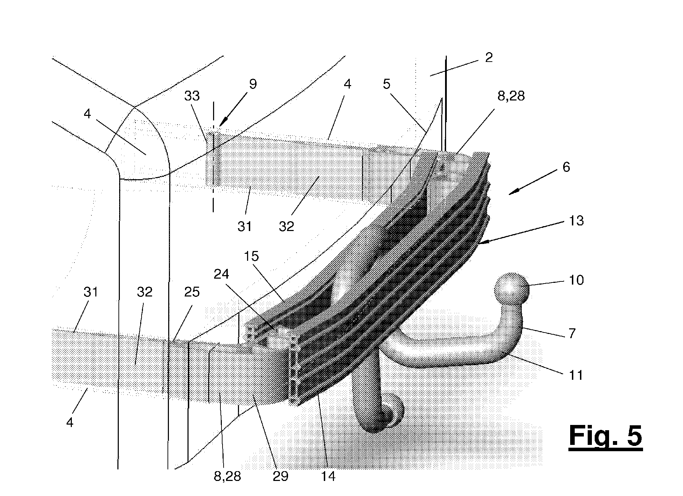

Das z.B. in Figur 5 im Querschnitt erkennbare Profilteil (16) kann als belastungsoptimierte Hohlkammerkonstruktion ausgeführt sein, bei der z.B. der Plattenkörper mehrere durch Querstege voneinander abgegrenzte innere Hohlkammern und außenseitig ein oder mehrere längslaufende Versteifungsrippen aufweist, die im Bereich der Querstege angeordnet sein können. Die Rippen können sich jeweils an der Plattenaußenseite befinden. An der Platteninnenseite kann das Profilteil (16) zumindest bereichsweise eine ebene Wandform haben, die auch zum Anschluss an die ein oder mehreren Halter (8) angepasst sein kann. Ferner kann das Profilteil (16) am oberen und unteren Plattenrand seitlich überstehende Querstege aufweisen.

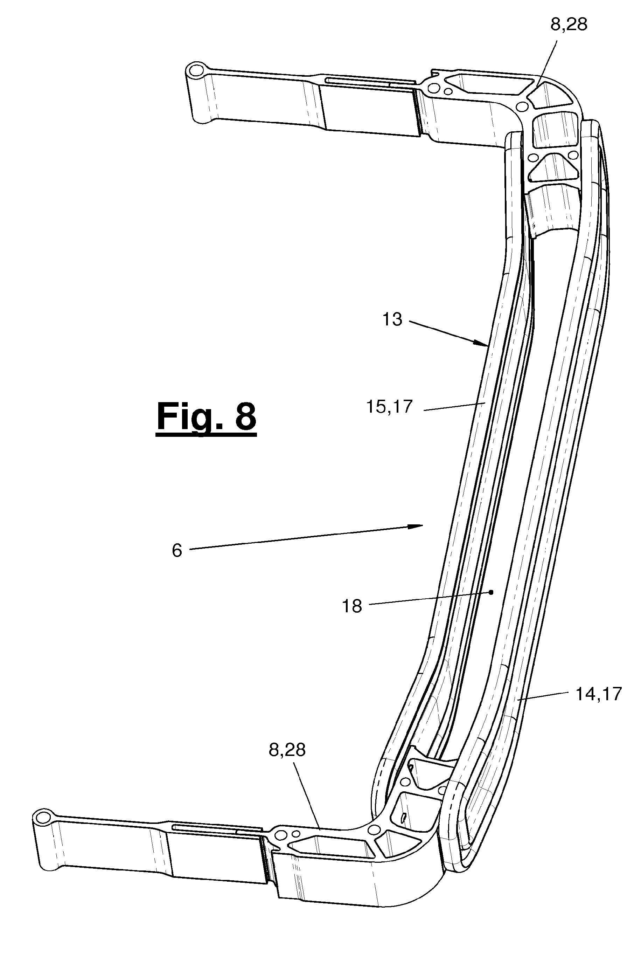

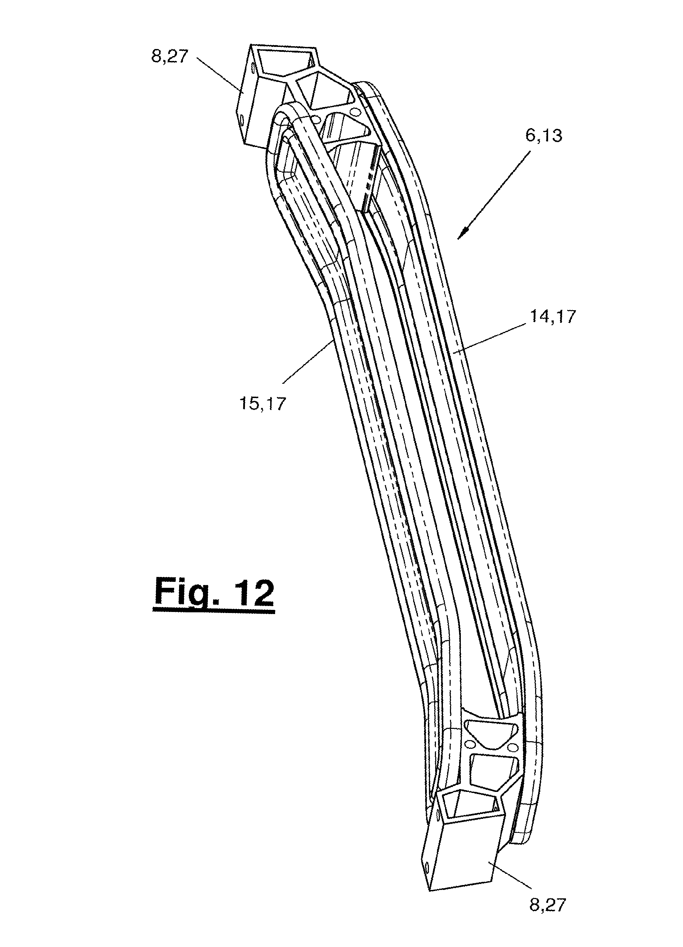

In Figur 8 und 12 ist eine Variante von einer oder mehreren Tragplatten (14,15) dargestellt, die hier als Prägeschale (17) gestaltet ist. Die Prägeschale (17) kann aus einem geeigneten Material, insbesondere Metall, beispielsweise Stahl, bestehen. Sie weist eine durch Prägen, Tiefziehen oder dgl. gebildete Rippenform auf. Hierbei können im inneren Plattenbereich mehrere längslaufende Rippen vorhanden sein. Randseitig kann ein z.B. umlaufender Wulst geformt sein.

Der Querträger (13) weist in den gezeigten Ausführungsbeispielen entweder Profilteile (16) oder Prägeschalen (17) auf. Alternativ können diese Bauformen auch gemischt eingesetzt werden.

In den gezeigten Ausführungsformen werden die Querträger (13) an beiden Enden über einen Halter (8) mit dem Fahrzeug (1) verbunden. Der Halter (8) weist ein Verbindungsteil (24) auf, an dem die Tragplatten (14,15) angeschlossen und abgestützt sind. Ferner hat jeder Halter (8) ein Anbauteil (25) für die Montage und Befestigung am Fahrzeug (1). Auch hierfür gibt es verschiedene Ausführungsformen.

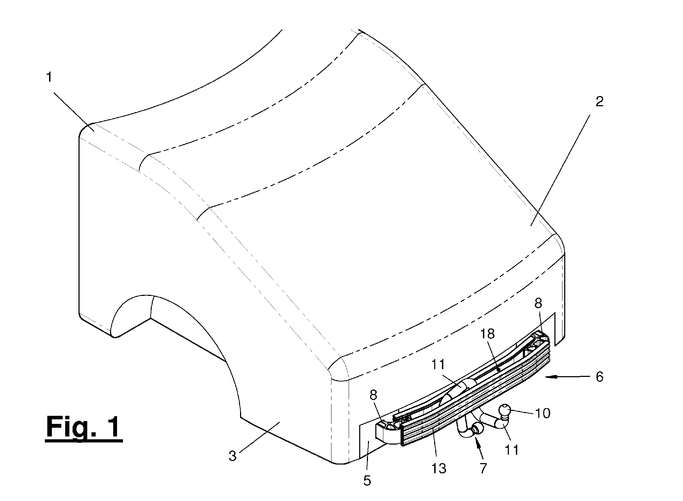

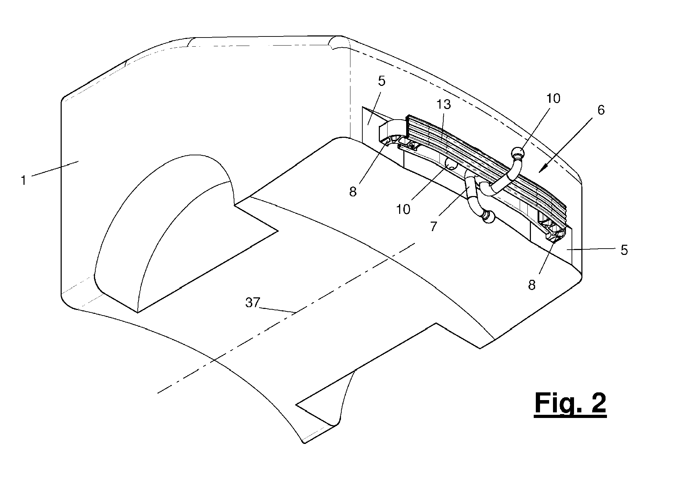

Figur 1 und 2 zeigen in verschiedenen perspektivischen Ansichten einen Querträger (13) in der Anbausituation am Fahrzeugheck (2). Figur 3 und 4 zeigen hierzu die vertikale Untersicht und die geklappte Seitenansicht. Die Anhängerkupplung (7) ist hierbei in verschiedenen Stellungen dargestellt. Figur 3 zeigt die ausgefahrene Betriebsstellung mit dem nach hinten über den Stoßfänger (38) ragenden und längs der Fahrzeuglängsachse (37) ausgerichteten Kugelhals (11). In der Ruhestellung taucht der Kugelhals (11) in den Freiraum (18) des Querträgers (13) ein und ist quer zur Längsachse (37) ausgerichtet. Die Krümmung des Kugelhalses (11) weist dabei nach oben, wobei der Kupplungskopf (10) nach unten gerichtet ist. Außerdem wird eine beim Ausschwenken eingenommene Zwischenstellung dargestellt.

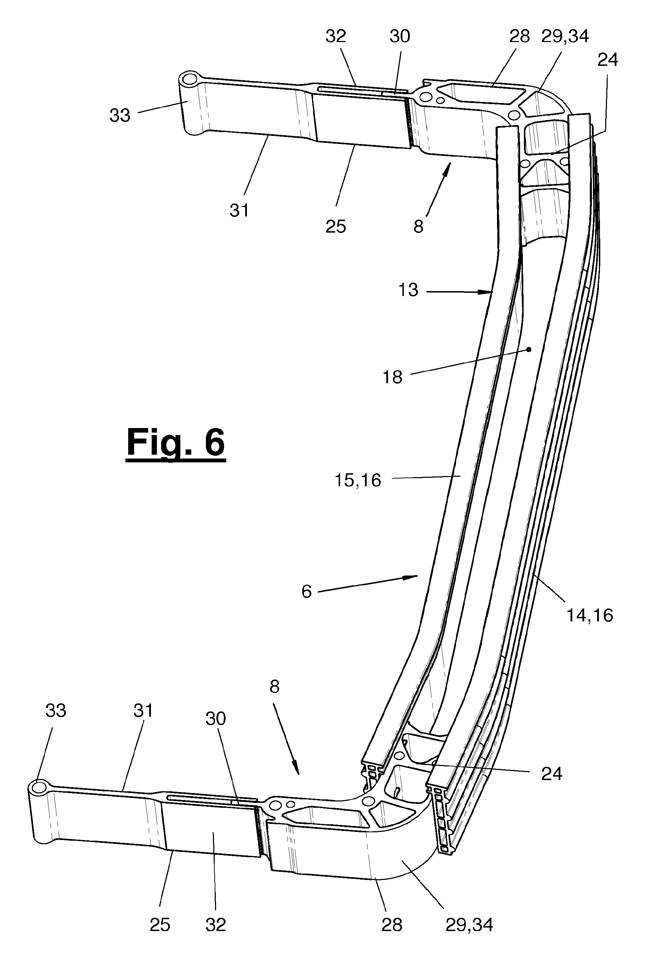

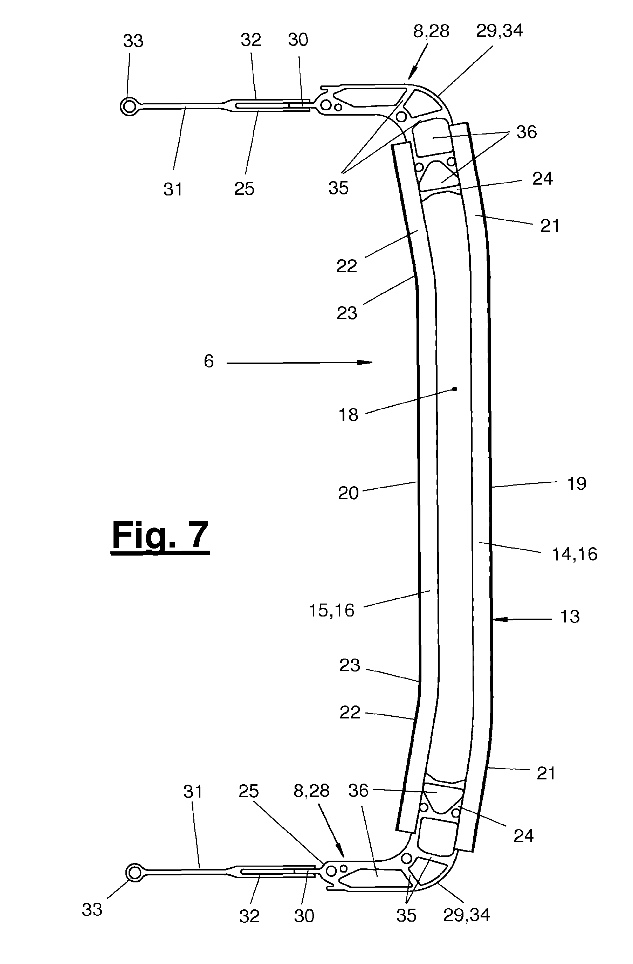

Figur 5 bis 7 verdeutlichen die weitere Ausgestaltung der Trägeranordnung (6). Die beiden Tragplatten (14,15) des Querträgers (13) sind in der vorgeschilderten Weise als Profilteile (16) ausgebildet. Sie weisen eine gewölbte Form auf und besitzen jeweils einen in Längsrichtung gebogenen Verlauf. Die Tragplatten (14,15) verlaufen zumindest bereichsweise parallel zueinander. Die äußere Tragplatte (14) und die innere Tragplatte (15) besitzen jeweils im mittleren Bereich einen geraden Abschnitt (19,20). Hier ist an zentraler Stelle die Anhängerkupplung (7) mit ihrem Kupplungsgestell (12) angeordnet und montiert. Die geraden Abschnitte (19,20) schließen an den Enden über Übergangsstellen (23) an gebogene Abschnitte (21,22) an. Die Übergangsstellen (23) können in der Lage so gewählt sein, dass der Freiraum (18) ausreichend lang und breit ist, um die Anhängerkupplung (7) in der Ruhestellung aufzunehmen und das Ein- und Ausschwenken des Kupplungshalses (11) ungehindert zuzulassen. Die Querträger- oder Tragplattenform kann zumindest an der Außenseite an die Formgebung des Stoßfängers (38) angepasst sein, wie dies z.B. Figur 3 schematisch andeutet.

Im Ausführungsbeispiel von Figur 1 bis 7 sind die Tragplatten (14,15) als Profilteile (16), insbesondere als Strangpressprofile der vorbeschriebenen Art ausgebildet. Figur 8 zeigt hierzu eine Variante mit einer Plattengestaltung als Prägeschalen (17).

Im Ausführungsbeispiel von Figur 1 bis 8 wird die Trägeranordnung (6) am Fahrzeug (1), z.B. an dessen Längsholmen (4) montiert. Figur 5 zeigt hierzu weitere Details. Beide Halter (8) sind in dieser Ausführungsform als Eckverbinder (28) ausgebildet, wobei ihr Verbindungsteil (24) quer oder schräg zur Längsachse (37) ausgerichtet ist und in den Freiraum (18) zwischen den beiden Tragplatten (14,15) eintaucht. Die schrägen oder gebogenen Abschnitte (21,22) liegen außenseitig am Verbindungsteil (24) an und sind hier mit einer Verbindung (9), z.B. einer Schraubverbindung oder dgl. befestigt.

Die Anbauteile (25) sind außerhalb der Tragplatten (14,15) angeordnet und gegenüber dem Verbindungsteil (24) um einen geeigneten Winkel, z.B. ca. 90°, abgewinkelt, wobei sie sich im wesentlichen parallel zur Längsachse (37) erstrecken. Der Halter (8) bzw. das Anbauteil (25) weist ein Bogenstück (29) auf, das rund gebogen oder mehrstufig abgewinkelt sein kann. Das Bogenstück (29) kann am freien Ende mit einem Anschlussteil (31) längenverstellbar verbunden sein. Das Anschlussteil (31) wird über die Verbindung (9), insbesondere eine vertikale Schraubverbindung, am Fahrzeug (1), insbesondere am Längsholm (4) montiert.

Wie Figur 5 bis 7 verdeutlichen, greifen das Bogenstück (29) und das Anschlussteil (31) formschlüssig ineinander. Hierbei weist das Bogenstück (29) ein axial vorspringendes und z.B. zungenartig ausgebildetes Stützteil (30) auf, welches in ein Gabelteil (32) am rückwärtigen Ende des Anschlussteils (31) eingreift. Die Eintauchtiefe ist veränderlich und erlaubt eine Anpassung an unterschiedliche bauliche Gegebenheiten des Fahrzeugs (1). Das Anschlussteil (31) und das Bogenstück (29) können in der gewünschten Stellung miteinander durch eine Schraubverbindung oder eine andere geeignete Verbindung fest verbunden sein. Ggf. kann auch ein Dämpf- oder Ausgleichselement eingebaut sein, welches eine begrenzte Beweglichkeit und Elastizität in Längsrichtung (37) zulässt. Diese Federwirkung oder Elastizität kann einseitig sein und nur bei einer von hinten auf die Trägeranordnung (6) einwirkenden Kraft gegegeben sein, die z.B. bei einem Anstoßen der Anhängerkupplung (7) an einem Hindernis bei Rückwärtsfahrt oder bei einem Auffahrunfall auftritt. In Zugrichtung des Fahrzeugs ist vorzugsweise eine feste und nicht nachgiebige Verbindung zwischen Bogenstück (29) und Anschlussteil (31) vorhanden.

Das Anschlussteil (31) trägt am vorderen Ende eine z.B. aufrecht stehende Hülse (33) für die Verbindung (9), die z.B. zum Durchstecken eines Schraubbolzens dient. Das Anschlussteil (31) kann beispielsweise in einen hohlen Längsholm (4) eintauchen und dort mittels der Schraubverbindung (9) befestigt sein. Alternativ ist eine außenseitige Anlage mit einer anderen Befestigung, z.B. durch Querschrauben oder dergleichen, möglich. Wie Figur 5 verdeutlicht, taucht bei dieser Befestigungs- und Montageart der Halter (8) bzw. das Bogenstück (29) durch eine Öffnung in der querliegenden Heckwand (5) der Karosserie (3).

In den Varianten von Figur 1 bis 8 ist der Halter (8) formstabil ausgebildet. Er kann insbesondere biegesteif sein. Der Halter (8) ist dabei zumindest bereichsweise als Profilteil (34) ausgebildet, das eine fachwerkartige Struktur besitzen und z.B. aus einem abgeschnittenen Strangpressprofil aus Leichtmetall oder dgl. bestehen kann. Das Profilteil (34) weist gebogene, glatte Außenwände und innenseitig einen oder mehrere stehend angeordnete Profilstege (35) auf, welche die Außenwände verbinden. Hierbei werden eine oder mehrere innen liegende Hohlkammern (36) gebildet, die in Einbaulage nach oben und unten offen sein können. Die Profilstege (35) können gegenseitig unterschiedliche Ausrichtungen haben und insbesondere im Biegebereich in etwa radiale Rippen bilden.

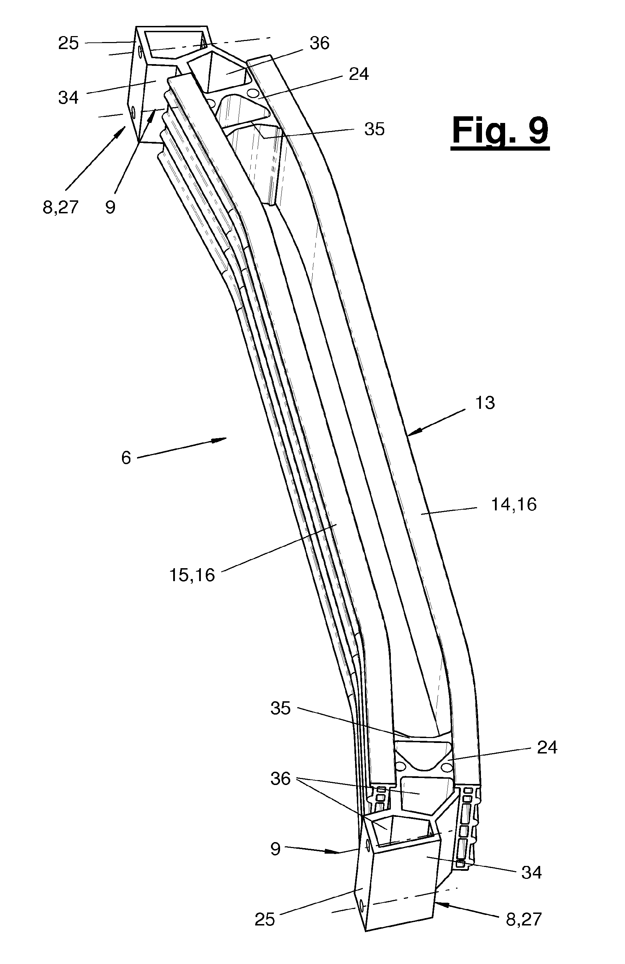

Figur 9 bis 12 zeigen zwei weitere Varianten der Trägeranordnung (6), wobei die Tragplatten (14,15) bei der Variante von Figur 9 bis 11 als Profilteile (16) und in der Ausführungsform von Figur 12 als Prägeschalen (17) ausgebildet sind. Der Unterschied gegenüber den ersten Ausführungsbeispielen besteht in der Gestaltung des Halters (8) und der Verbindung (9). Der Halter (8) ist hier als Geradverbinder (27) ausgebildet und wird mit der quer liegenden Heckwand (5) verbunden.

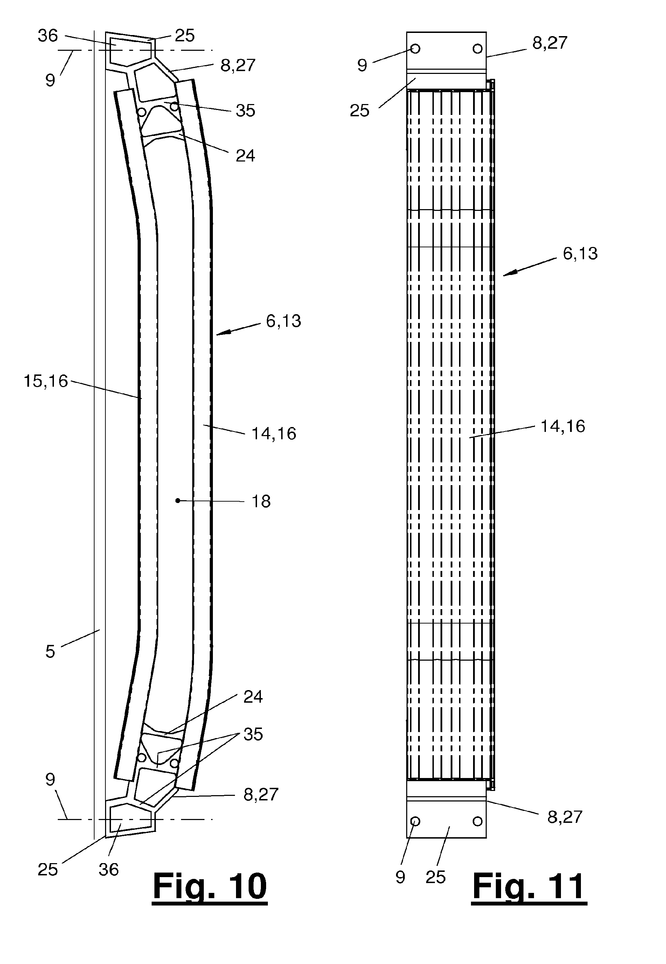

Die Halter (8) haben auch hier jeweils ein zwischen die Tragplatten (14,15) greifendes Verbindungsteil (24) und ein außerhalb der Platten angeordnetes Anbauteil (25), welches sich etwa in gerader Verlängerung des Verbindungsteils (24) bzw. der schrägen oder gebogenen Abschnitte (21,22) erstreckt. Der Geradverbinder (27) kann ebenfalls als Profilteil (34) mit stehenden bzw. vertikal ausgerichteten Profilstegen (35) und Hohlkammern (36) ausgebildet sein. Die äußere Hohlkammer weist eine plane Montagefläche zur Anlage und Befestigung an der Heckwand (5) auf und kann für eine Schraub- oder Bolzenverbindung entsprechende Bohrungen aufweisen. Zur Erzielung einer ausreichenden Trag- oder Dehnlänge der Schrauben oder Bolzen kann die Verbindung (9) die äußere Hohlkammer (36) in Längsrichtung (37) durchsetzen. Figur 10 zeigt diese Anordnung mit der schematisch dargestellten Heckwand (5).

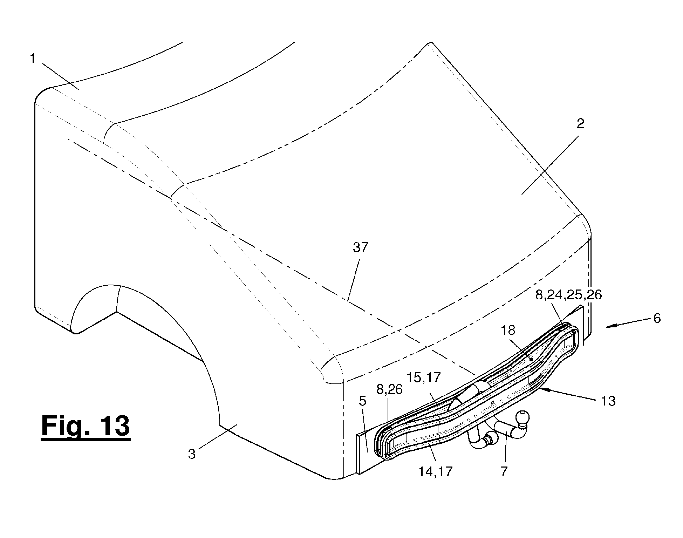

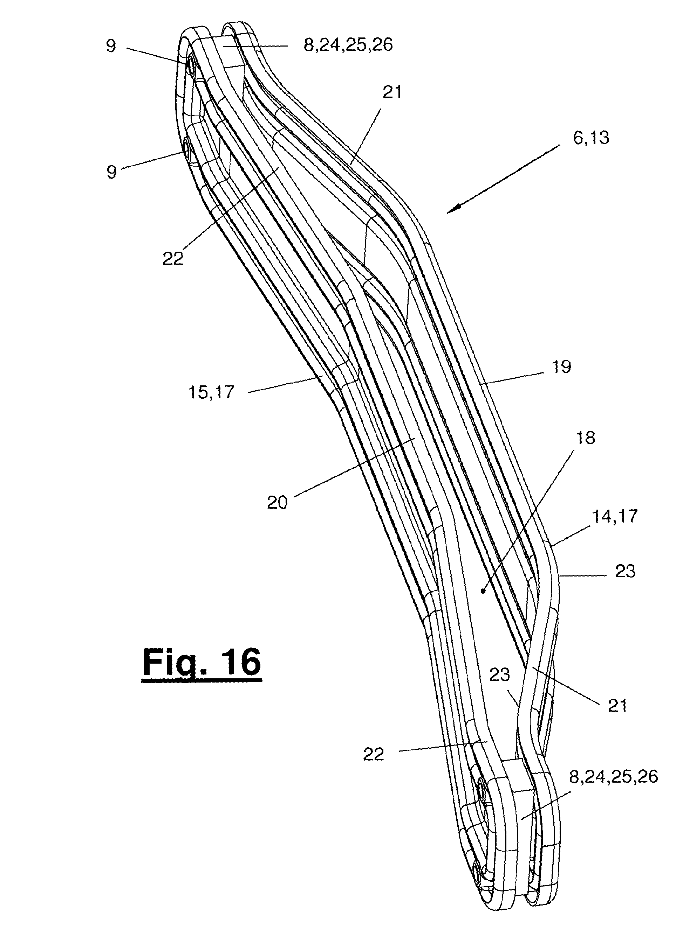

Figur 13 bis 18 zeigen eine weitere Variante der Trägeranordnung (6). Wie Figur 13 verdeutlicht, besteht der Querträger (13) wiederum aus zwei unter Bildung eines Freiraums (13) für die Anhängerkupplung (7) beabstandeten Tragplatten (14,15). Der Querträger (13) ist bei dieser Ausführungsform an geeigneter Stelle der Karosserie (3), z.B. an der quer liegenden Heckwand (5), montiert.

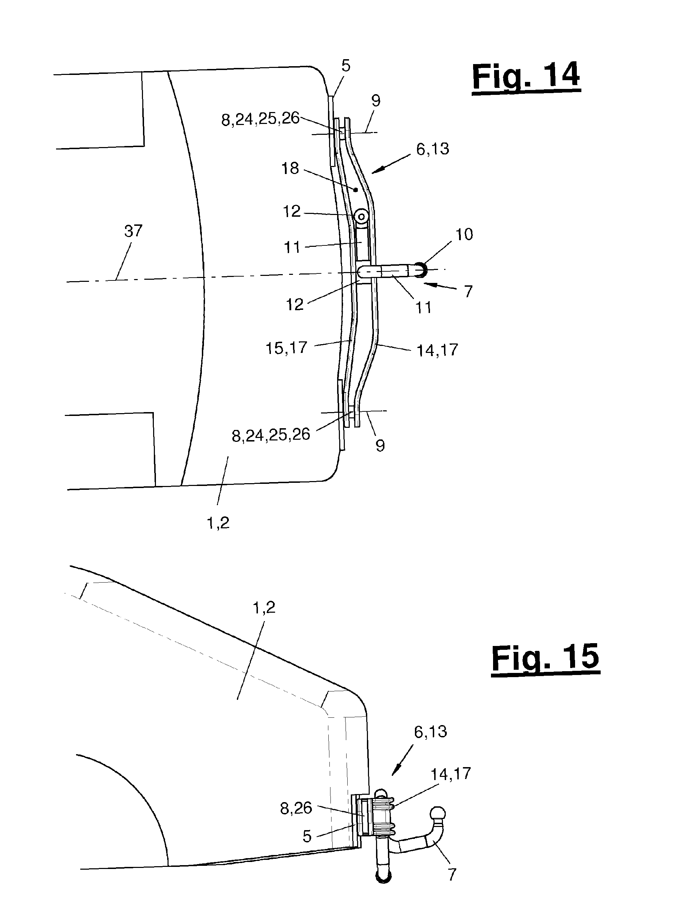

Figur 14 und 15 verdeutlichen die Anbausituation in einer vertikalen Unteransicht und einer geklappten Seitenansicht, wobei in Figur 14 die Anhängekupplung (7) in ausgefahrener Betriebsstellung und eingeschwenkter Ruhestellung dargestellt ist.

Der Halter (8) ist in diesen Ausführungsbeispielen als Distanzelement (26) ausgebildet, welches ein kombiniertes Verbindungs- und Anbauteil (24,25) darstellt und auch die Verbindung (9) aufnimmt. Das Distanzelement (26) kann insbesondere als Distanzklotz ausgebildet sein und befindet sich zwischen den Enden der Tragplatten (14,15). Die Dicke des Distanzelements (26) kann für eine Schraubverbindung (9) auf die benötigte Dehnlänge der Schrauben abgestellt sein. Die Tragplatten (14,15) und die Distanzelemente (26) werden mittels einer durchgehenden Verschraubung an einem ggf. verstärkten Teil der Heckwand (5) angeschraubt.

Die aufrechten Tragplatten (14,15) haben auch in diesem Ausführungsbeispiel eine gebogene Form, wobei die Wölbung der äußeren Tragplatte (14) stärker ausgebildet sein kann als diejenige der inneren Tragplatte (15). Hierdurch wird eine für die Freiraumbildung und den Einbau der Anhängerkupplung (7) günstige größere Distanz zwischen den geraden Abschnitten (19,20) geschaffen. Die gebogenen Abschnitte (21,22) können eine S-förmige doppelte Biegung mit zwei Übergangsstellen (23) aufweisen. An den endseitigen gebogenen Abschnitten (21,22) nähern sich die Tragplatten (14,15) stärker aneinander an, so dass das Verbindungselement (26) eine kleinere Dicke als das Verbindungsteil (24) beim vorstehend beschriebenen Geradverbinder (27) oder Eckverbinder (28) haben kann.

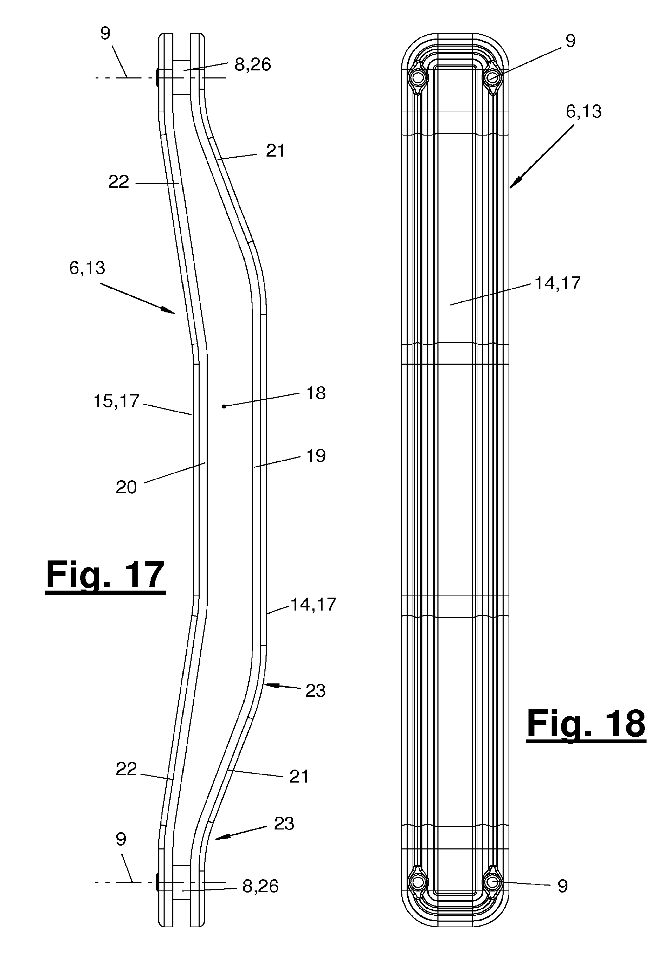

Figur 17 und 18 verdeutlichen die Formgebung der Prägeplatte (17), die im inneren Bereich eben sein kann und umlaufende ringartige Prägungen im anschließenden Wandbereich und eine Wulst am Außenrand haben kann. Hier sind außerdem die Durchgangsbohrungen in den Tragplatten (14,15) und dem Distanzelement (26) für die Schraub- oder Bolzenverbindungen (9) dargestellt.

In den vorbeschriebenen und in den Zeichnungen dargestellten Ausführungsbeispielen sind die Tragplatten (14,15) in aufrechter Lage angeordnet und haben eine vertikale oder schwach geneigte Ausrichtung mit einer überwiegend vertikalen Richtungskomponente. In einem nicht dargestellten Ausführungsbeispiel weist der Querträger (13) zwei oder mehr Tragplatten mit horizontaler oder schräger Ausrichtung auf. Im Freiraum zwischen den Tragplatten kann eine entsprechend angepasste Anhängerkupplung der vorbeschriebenen Art angeordnet sein. Diese kann starr, steckbar oder beweglich, insbesondere schwenkbar, sein, wobei die schwenkbare Ausführung eine entsprechend geänderte Kinematik hat. Die Tragplatten können entsprechend ihrer anderen Ausrichtung eine belastungs- und stützkraftgerechte Formgebung haben. Auch bei dieser Ausführungsform kann der Halter (8) zwischen die Tragplatten in den nun liegend ausgerichteten Freiraum greifen und kann hierfür eine entsprechend geeignete Formgebung haben. Diese kann der Formgebung in den vorbeschriebenen und in den Zeichnungen dargestellten Ausführungsbeispielen entsprechen, wobei der Halter (8) an der Ober- und Unterseite seines Verbindungsteils (24) entsprechende Verbindungsstellen zu den anliegenden Tragplatten aufweist. Der Halter (8) kann alternativ eine andere Formgebung besitzen und kann z.B. rohrförmig gestaltet sein. Das Anbauteil (25) kann in der vorbeschriebenen Weise ausgebildet sein.

Abwandlungen der beschriebenen Ausführungsformen sind in verschiedener Weise möglich. Sowohl die Zahl und Anordnung der Tragplatten (14,15) sowie ihre Formgebung können variieren. Ggf. sind drei oder vier oder mehr Tragplatten oder bei entsprechend steifer Ausbildung auch nur eine einzelne Tragplatte möglich. Der Querträger (13) kann außerdem zumindest bereichsweise eine Rohrform aufweisen. Ferner kann die Zahl, Ausbildung und Anordnung des oder der Halter (8) variieren. Beispielsweise kann je nach Fahrzeugausbildung ein einzelner Halter (8) genügen. Es können andererseits auch mehr als zwei Halter (8), z.B. drei oder vier oder mehr sein. Der Halter (8) kann einteilig oder mehrteilig ausgestaltet sein. Auch für das erste Ausführungsbeispiel mit dem Eckverbinder (27) ist eine einteilige Ausführung möglich, wobei das Bogenteil (29) z.B. mit dem Stützteil (30) einstückig ausgebildet ist. Ferner kann die Verbindung zwischen getrennt angeordneten Bogenstücken (29) und Stützteilen (30) variieren. Die Zuordnung von Zunge (30) und Gabel (31) kann vertauscht werden. Der Halter (8) und insbesondere der Geradverbinder (27) und der Eckverbinder (28) können als Rohrteil ausgeführt sein. Es ist auch eine Verbundkonstruktion aus distanzierten Außenwänden mit eingezogenen Querstegen möglich.

### BEZUGSZEICHENLISTE

- 1: Fahrzeug, Kraftfahrzeug
- 2: Heck
- 3: Karosserie
- 4: Längsholm
- 5: Heckwand
- 6: Trägeranordnung
- 7: Anhängerkupplung
- 8: Halter
- 9: Verbindung, Schraubverbindung
- 10: Kupplungskopf, Kupplungskugel
- 11: Kupplungshals
- 12: Kupplungsgestell
- 13: Querträger
- 14: Tragplatte außen
- 15: Tragplatte innen
- 16: Profilkörper, Strangpressprofil
- 17: Prägeschale
- 18: Freiraum
- 19: gerader Abschnitt außen
- 20: gerader Abschnitt innen
- 21: gebogener Abschnitt außen
- 22: gebogener Abschnitt innen
- 23: Übergangsstelle
- 24: Verbindungsteil
- 25: Anbauteil
- 26: Distanzelement, Distanzklotz
- 27: Geradverbinder
- 28: Eckverbinder
- 29: Bogenstück
- 30: Stützteil, Zunge
- 31: Anschlussteil
- 32: Gabelteil
- 33: Hülse
- 34: Profilteil
- 35: Profilsteg
- 36: Kammer, Hohlkammer
- 37: Längsachse
- 38: Stoßfänger

## Patentansprüche

1. Trägeranordnung für eine Anhängerkupplung (7) zur Verbindung mit einem Fahrzeug (1), **dadurch gekennzeichnet, dass** die Trägeranordnung (6) als Leichtbaukonstruktion ausgebildet ist und einen Querträger (13) sowie einen Halter (8) zur Montage am Fahrzeug (1) aufweist, wobei der Querträger (13) mehrere im wesentlichen gleichgerichtete, aufrechte und zumindest bereichweise seitlich distanzierte Tragplatten (14,15) aufweist.

2. Trägeranordnung nach Anspruch 1, **dadurch gekennzeichnet, dass** die Anhängerkupplung (7) im Freiraum (18) zwischen den Tragplatten (14,15) angeordnet und mit diesen verbunden ist.

3. Trägeranordnung nach Anspruch 1 oder 2, **dadurch gekennzeichnet, dass** der Halter (8) die Tragplatten (14,15) untereinander und mit dem Fahrzeug (1) verbindet.

4. Trägeranordnung nach Anspruch 1, 2 oder 3, **dadurch gekennzeichnet, dass** eine Tragplatte (14,15) als Profilkörper (16), insbesondere als Strangpressprofil aus Leichtmetall oder als Prägeschale (17) aus Metall, insbesondere Stahl, ausgebildet ist.

5. Trägeranordnung nach einem der vorhergehenden Ansprüche, **dadurch gekennzeichnet, dass** mindestens eine Tragplatte (14,15) in Längsrichtung einen gebogenen Verlauf aufweist, wobei die Tragplatten (14,15) zumindest bereichsweise parallel verlaufen.

6. Trägeranordnung nach einem der vorhergehenden Ansprüche, **dadurch gekennzeichnet, dass** eine Tragplatte (14,15) im mittleren Bereich einen geraden Abschnitt (19,20) und an den Enden gebogene Abschnitte (21,22) aufweisen.

7. Trägeranordnung nach einem der vorhergehenden Ansprüche, **dadurch gekennzeichnet, dass** der Halter (8) ein Verbindungsteil (24) zum Anschluss am Querträger (13) und ein Anbauteil (25) zum Anschluss am Fahrzeug (1) mit vorzugsweise verzugfreien Verbindungen (9), insbesondere Schraubverbindung, aufweist.

8. Trägeranordnung nach einem der vorhergehenden Ansprüche, **dadurch gekennzeichnet, dass** der Halter (8) ein kombiniertes Verbindungs- und Anbauteil (24,25) mit einem Distanzelement (26) und einer Verbindung (9) zwischen den Tragplatten (14,15) aufweist.

9. Trägeranordnung nach einem der vorhergehenden Ansprüche, **dadurch gekennzeichnet, dass** der Halter (8) als Geradverbinder (27) ausgebildet ist und ein Verbindungsteil (24) zwischen den Tragplatten (14,15) und ein außerhalb angeordnetes und mit gerader oder schräger Verlängerung anschließendes Anbauteil (25) mit einer Verbindung (9) aufweist oder der Halter (8) als Eckverbinder (28) ausgebildet ist und ein Verbindungsteil (24) zwischen den Tragplatten (14,15), und ein außerhalb angeordnetes, abgewinkeltes Anbauteil (25) mit einer Verbindung (9) aufweist.

10. Trägeranordnung nach einem der vorhergehenden Ansprüche, **dadurch gekennzeichnet, dass** das Anbauteil (25) ein Bogenstück (29) aufweist, das am freien Ende mit einem Anschlussteil (31) längenverstellbar verbunden ist.

11. Trägeranordnung nach einem der vorhergehenden Ansprüche, **dadurch gekennzeichnet, dass** das Bogenstück (29) und das Anschlussteil (31) formschlüssig ineinander greifen und ein Stützteil (30) sowie ein Gabelteil (32) aufweisen, wobei das Anschlussteil (31) endseitig eine Hülse (33) für eine Verbindung (9) zum Fahrzeug (1) aufweist.

12. Trägeranordnung nach einem der vorhergehenden Ansprüche, **dadurch gekennzeichnet, dass** der Halter (8) biegesteif ausgebildet ist.

13. Trägeranordnung nach einem der vorhergehenden Ansprüche, **dadurch gekennzeichnet, dass** der Halter (8) zumindest bereichsweise als Profilteil (34) mit stehend angeordneten Profilstegen (35) und innen liegenden Hohlkammern (36) ausgebildet ist.

14. Trägeranordnung nach einem der vorhergehenden Ansprüche, **dadurch gekennzeichnet, dass** das Profilteil (34) als Strangpressprofil aus Leichtmetall ausgebildet ist.

15. Trägeranordnung nach einem der vorhergehenden Ansprüche, **dadurch gekennzeichnet, dass** die Anhängerkupplung (7) als Schwenkkupplung ausgebildet ist, deren Kupplungshals (11) in Ruhestellung im Freiraum (18) angeordnet ist.
